# EUROPEAN PATENT APPLICATION

(11) **EP 2 804 384 A1**
(43) Date of publication of application: **19.11.2014**
(21) Application number: 14168368.0
(22) Date of filing: 14.05.2014
(51) Int. Cl.: H04N 19/174, H04N 19/146, H04N 19/129, H04N 19/70, H04N 19/30, H04N 19/176, H04N 19/124

(54) **Slice level bit rate control for video coding**

(30) Priority: 15.05.2013 US 201313895094
(71) Applicant: Intel Corporation, Santa Clara, CA 95054 (US)
(72) Inventor: Wang, Ce, Bellevue Washington 98007 (US)
(74) Representative: Jansen, Cornelis Marinus

(57) **Abstract**

Systems, articles, and methods are described including operations for slice level bit rate control for video coding.

## Description

### BACKGROUND

A video encoder compresses video information so that more information can be sent over a given bandwidth. The compressed signal may then be transmitted to a receiver that decodes or decompresses the signal prior to display. For conventional playback of video bitstreams from optical computer storage media such as compact discs (CDs), digital video discs (DVDs), and BlueRay DVDs, the encoded bitstream, as well as the encoded bit rate are stored on the media, and the decoding process in the player typically requires compliance with hypothesis reference decoder (HDR) specifications. These specifications may include a bit buffer volume, an initial delay time, and a constant data removal rate. Thus, a video encoder must generate encoded bitstreams that will feed into the buffer at a rate that will avoid overflow which delays the coding process or results in the loss of frame data, or underflow, which slows the process since the full capacity of the decoder is not being used.

One conventional way to control the encoded bit rate is to adjust quantization parameters (QP) by predicting future usage. The QP values can be adjusted on a frame, slice, or Macroblock (MB) basis.

With the advent of video conferencing and online video streaming applications, encoders also may be required to provide encoded bitstreams with slices each smaller than a specific maximum bit size. A complex algorithm would be needed to adjust the QP at this point to comply with slice bit size requirements in addition to the requirements of the HDR and while avoiding a perceivable drop in picture quality.

In the alternative, the geometric or structural shape of the slices may be changed by reallocating macroblocks among the slices to comply with the size requirements. This may require a change in allocation for all of the slices forming a frame and depending on the slice bit size requested requiring substantial computational work. Such a process will also degrade the picture quality because data redundancy between slice boundaries cannot be used. In other words, a macroblock can no longer obtain prediction information from a neighboring macroblock if they are separated into different slices. This prediction information may include data about a motion vector (MV) predictor, an MB mode, pixel values if intra encoded, and so forth. Also, the reallocation process will typically require a second pass through deblocking filters (to clean up slice boundaries), DCT transform and quantization in order to redefine the slices which causes delay and decreases performance.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:
FIG. 1 is an illustrative diagram of an example video coding system;
FIG. 2 is an illustrative diagram of a portion of the example video coding system of FIG. 1;
FIG. 3 is an illustrative diagram of a DCT coefficient arrangement and slices according to the example video coding system of FIG. 1;
FIG. 4 is an illustrative diagram of another DCT coefficient arrangement and slices according to the example video coding system of FIG. 1;
FIG. 5 is a flow chart illustrating an example video coding process;
FIG. 6 is an illustrative diagram of an example video coding process in operation;
FIG. 7 is an illustrative diagram of an example video coding system;
FIG. 8 is an illustrative diagram of an example system for operating the example video coding system; and
FIG. 9 is an illustrative diagram of an example system, all arranged in accordance with at least some implementations of the present disclosure.

### DETAILED DESCRIPTION

One or more implementations are now described with reference to the enclosed figures. While specific configurations and arrangements are discussed, it should be understood that this is done for illustrative purposes only. Persons skilled in the relevant art will recognize that other configurations and arrangements may be employed without departing from the spirit and scope of the description. It will be apparent to those skilled in the relevant art that techniques and/or arrangements described herein may also be employed in a variety of other systems and applications other than what is described herein.

While the following description sets forth various implementations that may be manifested in architectures such as system-on-a-chip (SoC) architectures for example, implementation of the techniques and/or arrangements described herein are not restricted to particular architectures and/or computing systems and may be implemented by any architecture and/or computing system for similar purposes. For instance, various architectures employing, for example, multiple integrated circuit (IC) chips and/or packages, and/or various computing devices and/or consumer electronic (CE) devices such as set top boxes, smart phones, etc., may implement the techniques and/or arrangements described herein. Further, while the following description may set forth numerous specific details, such as logic implementations, types and interrelationships of system components, logic partitioning/integration choices, and so forth, claimed subject matter may be practiced without such specific details. In other instances, some material such as, for example, control structures and full software instruction sequences, may not be shown in detail in order not to obscure the material disclosed herein.

The material disclosed herein may be implemented in hardware, firmware, software, or any combination thereof. The material disclosed herein may also be implemented as instructions stored on a machine-readable medium, which may be read and executed by one or more processors. A machine-readable medium may include any medium and/or mechanism for storing or transmitting information in a form readable by a machine (e.g., a computing device). For example, a machine-readable medium may include read-only memory (ROM); random access memory (RAM); magnetic disk storage media; optical storage media; flash memory devices; electrical, optical, acoustical or other forms of propagated signals (e.g., carrier waves, infrared signals, digital signals, and so forth), and others. In another form, a non-transitory article, such as a non-transitory computer readable medium, may be used with any of the examples mentioned above or other examples except that it does not include a transitory signal per se. It does include those elements other than a signal per se that may hold data temporarily in a "transitory" fashion such as RAM and so forth.

References in the specification to "one implementation", "an implementation", "an example implementation", etc., indicate that the implementation described may include a particular feature, structure, or characteristic, but every implementation may not necessarily include the particular feature, structure, or characteristic. Moreover, such phrases are not necessarily referring to the same implementation. Further, when a particular feature, structure, or characteristic is described in connection with an implementation, it is submitted that it is within the knowledge of one skilled in the art to effect such feature, structure, or characteristic in connection with other implementations whether or not explicitly described herein.

Systems, articles, and methods are described below including operations for slice level bit rate control for video coding.

Encoded bitstreams typically share transmission pathways from an encoder to a decoder with other transmitted data. Thus, the available bandwidth or bit rate for the encoded bitstream is often dynamic. The decoder also places other restrictions on the bit rate, such as hypothesis reference decoder (HDR) specifications. These specifications may include a bit buffer volume, an initial delay time, and a constant data removal rate. Thus, a video encoder must generate encoded bitstreams that will feed into the buffer at a rate that will avoid overflow and underflow. Decoders for video conferencing and online video streaming may now have a maximum slice bit size restriction as well. The slice size, in terms of a dynamic available bit rate, may be transmitted to encoders for compliance for forming an encoded bitstream.

As mentioned above, some attempts at controlling the bit rate of an encoded bitstream include adjustment of quantization parameters (QP) by predicting future usage. With online video streaming, however, the calculations become too complex especially when added to the HDR requirements.

In order to address the bit rate restrictions for video streaming, macroblock reallocation may be used to change the assignment of a macroblock from one geometric slice to another geometric slice, changing the geometric shape of the slice. A geometric slice is usually assigned to an object on an image or picture so that the edges of a slice align with the edges of the object on the image. This reallocation of macroblocks prioritizes bit rate over alignment and may cause overlap at the slice boundaries, which may degrade the picture quality. Reallocation of macroblocks may also cause decreased performance and delay since redefining geometric slices may require a second pass through the DCT transform, quantization, and deblocking filters, as well as a heavy computational load.

Both of these methods for correcting bit rate are considered to provide fairly coarse bit rate correction acceptable for lower quality video and may result in perceivable image degradation with higher quality video images, such as those provided by enhancement layers with scalable video coding (SVC).

The present system provides for fine tuning of bit rate for video bitstreams that can be used for high quality image display. The coding standard for the system may be H.264 with Advanced Video Codec (AVC) and SVC extension (such as H.264/MPEG-4 AVC-SVC, for example), or the like, such as MPEG-2, VC1, and so forth, although many other versions or standards may operate adequately with the disclosed video coding system. The standards may be used as long as it provides a way to eliminate high frequency coefficients by predicting the stream bit rate and without requiring a change in quantization parameter values while doing so as explained in greater detail below. High Efficiency Video Coding (HEVC) may also be used with SVC in the present system. Other standards that may be used include VP8/WebM from Google, and so forth.

SVC is an important tool used to cope with the heterogeneity of networks and devices in modern video service environments. An SVC bitstream contains several subset bitstreams that can be decoded independently, and these sub streams represent the source video content with different resolution, frame rate, quality, bit depth, and so forth. The scalabilities are achieved by using a multi-layer coding structure. In general, there is typically one base layer, which may be encoded at first, and then several enhancement layers in an SVC system. The present disclosure provides for fine-tuning of a bit rate, and therefore is more suited for one of the enhancement layers, but may be used for any of the layers including the base layer. The present system may be provided at a single layer, all layers, or only particular layers, such as those that provide for a certain minimum quality image.

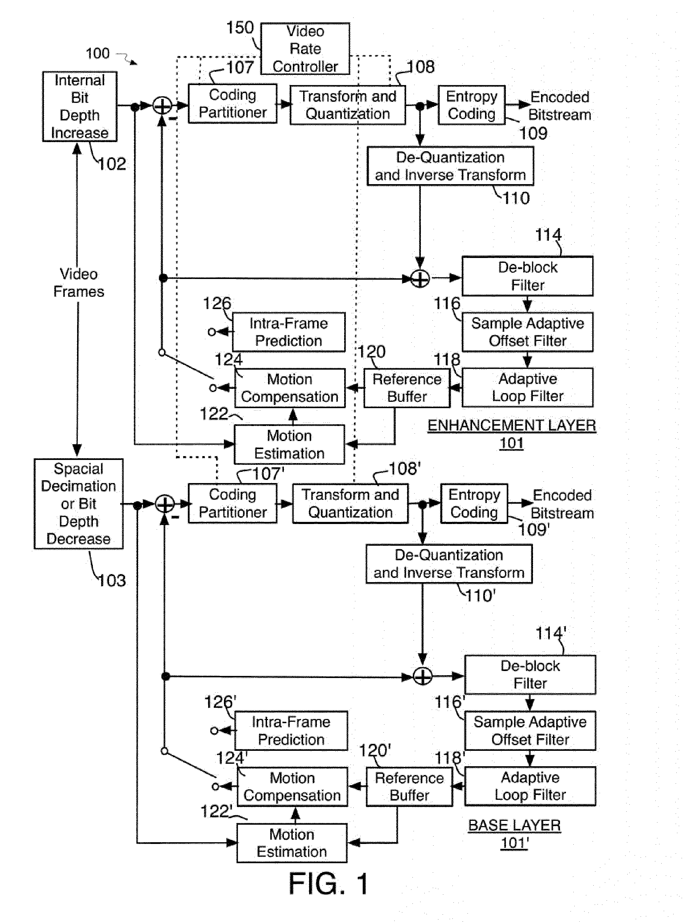

Referring to FIG. 1, an example video coding system 100 is arranged in accordance with at least some implementations of the present disclosure. In various implementations, video coding system 100 may be configured to undertake video coding and/or implement video codecs according to one or more standards mentioned above. Further, in various forms, video coding system 100 may be implemented as part of an image processor, video processor, and/or media processor and may undertake inter prediction, intra prediction, predictive coding, and/or residual prediction.

As used herein, the term "coder" may refer to an encoder and/or a decoder. Similarly, as used herein, the term "coding" may refer to encoding via an encoder and/or decoding via a decoder. A coder, encoder, or decoder may have components of both an encoder and decoder.

In some examples, video coding system 100 may include additional items that have not been shown in FIG. 1 for the sake of clarity. For example, video coding system 100 may include a processor, a radio frequency-type (RF) transceiver, a display, and/or an antenna. Further, video coding system 100 may include additional items such as a speaker, a microphone, an accelerometer, memory, a router, network interface logic, and so forth, that have not been shown in FIG. 1 for the sake of clarity.

In some examples, video coding system 100 may perform SVC operations. For example, two spatial resolution layers (e.g., base layer 101' and enhancement layer 101), are illustrated; however, any number of enhancement layers may be utilized in addition to base layer 101'. Base layer 101' may be processed via an H.264/AVC (and/or an HEVC) compatible encoder. Information associated with base layer (for example, such as prediction mode, reconstructed pixel, and so on) may be used for coding of enhancement layer 101.

For example, during the operation of video coding system 100 on enhancement layer 101, current video information may be provided to an internal bit depth increase module 102 in the form of a frame of video data and subjected to video transform and quantization processes by a transform and quantization module 108. The output of transform and quantization module 108 may be provided to an entropy coding module 109 and to a de-quantization and inverse transform module 110. De-quantization and inverse transform module 110 may implement the inverse of the operations undertaken by transform and quantization module 108. Those skilled in the art may recognize that transform and quantization modules and de-quantization and inverse transform modules as described herein may employ scaling techniques. The output of de-quantization and inverse transform module 110 may be provided to a loop including a de-blocking filter 114, a sample adaptive offset filter 116, an adaptive loop filter 118, a buffer 120, a motion estimation module 122, a motion compensation module 124, and an intra-frame prediction module 126. As shown in FIG. 1, the output of either motion compensation module 124 or intra-frame prediction module 126 is combined with the output of de-quantization and inverse transform module 110 as input to de-blocking filter 114.

For example, in video coding system 100, a current video frame may be provided to a motion estimation module 122. System 100 may process the current frame in units of image macroblocks (described below) in raster scan order. When video coding system 100 is operated in inter-prediction mode, motion estimation module 122 may generate a residual signal in response to the current video frame and a reference video frame. Motion compensation module 124 may then use the reference video frame and the residual signal provided by motion estimation module 122 to generate a predicted frame.

The predicted frame may then be subtracted from the current frame and the result provided to a coding partitioner 107. Coding partitioner 107 may partition the predicted frame for compression by division into one or more geometric slices and/or blocks (described further below) and the result may be provided to a transform and quantization module 108. The block may then be transformed (using a block transform) and quantized to generate a set of quantized transform coefficients which may be reordered and entropy coded by entropy coding module 109 to generate a portion of a compressed bitstream (for example, a Network Abstraction Layer (NAL) bitstream) provided by video coding system 100. In various implementations, a bitstream provided by video coding system 100 may include entropy-encoded coefficients in addition to side information used to decode each block (e.g., prediction modes, quantization parameters, motion vector information, and so forth) and may be provided to other systems and/or devices as described herein for transmission or storage.

The output of transform and quantization module 108 may also be provided to de-quantization and inverse transform module 110. De-quantization and inverse transform module 110 may implement the inverse of the operations undertaken by transform and quantization module 108 and the output of de-quantization, and inverse transform module 110 may be combined with the predicted frame to generate a reconstructed frame. When video coding system 100 is operated in intra-prediction mode, intra-frame prediction module 126 may use the reconstructed frame to undertake intra-prediction schemes that will not to be described in greater detail herein.

In one form, for the H.264/AVC standard and the like, a frame or image is divided into the slices by the coding partitioner 107, and the slices are typically assigned to objects in the image or frame as mentioned above. The coding partitioner 107 also divides each frame into macroblocks (MB) associated with a number of pixels, typically 16x16 and assigns the macroblocks to the slices. The macroblocks may be further divided into 4x4 or 8x8 blocks for compression.

When an HEVC standard is being used, while slices are still used, macroblocks have been replaced with coding units (CU) (also called large coding units (LCU)). For this standard, a current frame may be partitioned for compression by coding partitioner 107 by division into one or more slices of coding tree blocks (e.g., 64x64 luma samples with corresponding chroma samples). Each coding tree block may also be divided into coding units (CU) in quad-tree split scheme. Further, each leaf CU on the quad-tree may be divided into partition units (PU) for motion-compensated prediction. In various implementations in accordance with the present disclosure, CUs may have various sizes including, but not limited to 64x64, 32x32, 16x16, and 8x8, while for a 2Nx2N CU, the corresponding PUs may also have various sizes including, but not limited to, 2Nx2N, 2NxN, Nx2N, NxN, 2Nx0.5N, 2Nx1.5N, 0.5Nx2N, and 1.5Nx2N. It should be noted, however, that the foregoing are only example CU partition and PU partition shapes and sizes, the present disclosure not being limited to any particular CU partition and PU partition shapes and/or sizes.

As used herein, the term "block" may refer to a CU, or to a PU of video data for HEVC and the like, or otherwise a 4x4 or 8x8 or other shaped block as a division of a macroblock of video or pixel data for H.264/AVC and the like, unless defined otherwise.

In various implementations, and for both standards mentioned above, a slice may be designated as an I (Intra), P (Predicted), B (Bi-predicted), SP (Switching P), SI (Switching I) type slices, or the like. In general, a frame may include different slice types. Further, frames may be designated as either non-reference frames or as reference frames that may be used as references for inter-frame prediction. In I slices, spatial prediction is used, and in one form, only from data in the frame itself. In P slices, temporal (rather than spatial) prediction may be undertaken by estimating motion between frames. In B slices, two motion vectors, representing two motion estimates per PU may be used for temporal prediction or motion estimation. In other words, for example, a B slice may be predicted from slices on frames from either the past, the future, or both relative to the B slice. In addition, motion may be estimated from multiple pictures occurring either in the past or in the future with regard to display order. In various implementations, motion may be estimated at the various CU or PU levels corresponding to the sizes mentioned above.

Similarly, during the operation of video coding system 100 on base layer 101', current video information may be provided to a spatial decimation or bit depth decrease module 103 in the form of a frame of video data and then passed to a coding partitioner 107'. Coding partitioner 107' performs partitioning of the frame for compression by division into one or more slices, macroblocks, and/or blocks, and the result may be provided to a transform and quantization module 108'. Transform and quantization module 108' may perform video transform and quantization processes. The output of transform and quantization module 108' may be provided to a de-quantization and inverse transform module 110'. De-quantization and inverse transform module 110' may implement the inverse of the operations undertaken by transform and quantization module 108' to provide output to a loop including a de-blocking filter 114', a sample adaptive offset filter 116', an adaptive loop filter 118', a buffer 120', a motion estimation module 122', a motion compensation module 124', and an intra-frame prediction module 126'. Those skilled in the art may recognize that transform and quantization modules and de-quantization and inverse transform modules as described herein may employ scaling techniques. As shown in FIG. 1, the output of either motion compensation module 124' or intra-frame prediction module 126' are both combined with the output of de-quantization and inverse transform module 110' as input to de-blocking filter 114'.

In operation, during decoding a two-layer SVC bitstream may be demuxed into two separate bitstreams (e.g. base layer 101' bitstream and enhancement layer 101 bitstream), for decoding. The base layer 101' bitstream could be independently decoded to reconstruct the base layer output video. For HEVC-based SVC, the base layer 101' bitstream could be decoded independently, while the enhancement layer 101 bitstream could not be independently decoded to reconstruct the output video. The enhancement layer 101 bitstream may be decoded together with the base layer reconstructed video, because inter-layer prediction may be used for the encoding of some enhancement layer blocks. The base layer 101' reconstructed video may be processed before being applied for inter-layer prediction. Additional operations for picture up-sampled for spatial scalability, picture tone mapping for bit-depth scalability, de-interlacing for interlace-progressive scalability, or some other kind of processing may optionally be performed.

As will be described in greater detail below, a video rate controller 150 may be connected to the coding partitioners 107 and 107', as well as the transform and quantization modules 108 and 108'. While the video rate controller 150 is shown to change the bit rate for both the base layer 101' and the enhancement layer 101, the video rate controller 150 may be operable on only one layer, on at least one layer, multiple specific layers, or all of the layers. The video rate controller 150 changes the bit rate for the video data being encoded and in order to provide a bit rate for a resulting encoded bitstream that complies with bit rate data or bandwidth restrictions based at least in part from an available bit rate. The available bit rate may be received from one or more decoders, and may or may not factor in standard bit rate restrictions based on particular applications or computer programs. For one example, where a number of receiver clients exist for a video conference, each of the receivers contact a server (MCU/multipoint control unit) and provide their preferred video formats (resolution or codecs and so forth) as well as the bandwidth between receiver and server. The server will aggregate all of these requests and generate a minimal bandwidth and resolution set which fits most clients while achieving the best quality possible. This bandwidth and resolution set will be passed to an encoder, and the encoder will determine how to generate layers and allocate bandwidth among the receiveers. The available bit rate is calculated in Bps (bits per second).

In general, the video rate controller 150 has the ability to reallocate discrete cosine transform (DCT) coefficients from a large slice to a smaller slice relative to bit size in order to change the number of bits in a slice, and therefore, provide a more uniform slice size in an encoded bitstream. This will provide the fine tuning of the bit rate. Additionally, the video rate controller 150 also may provide for macroblock redistribution among the slices as well as quantitative parameter adjustment to provide coarse bit rate adjustment. The DCT coefficient reallocation, in one form, may then supplement the coarse adjustment.

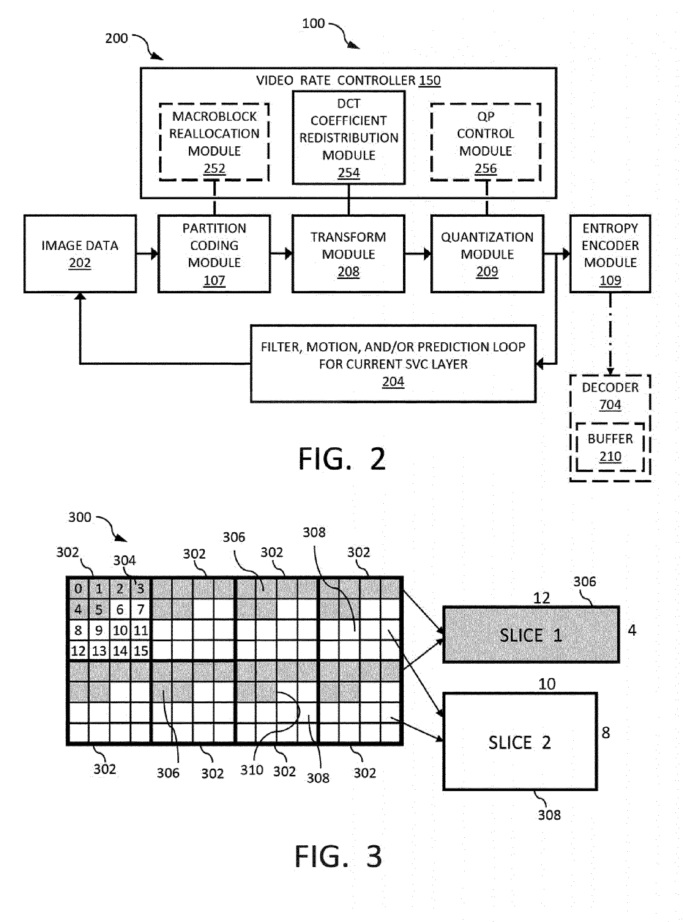

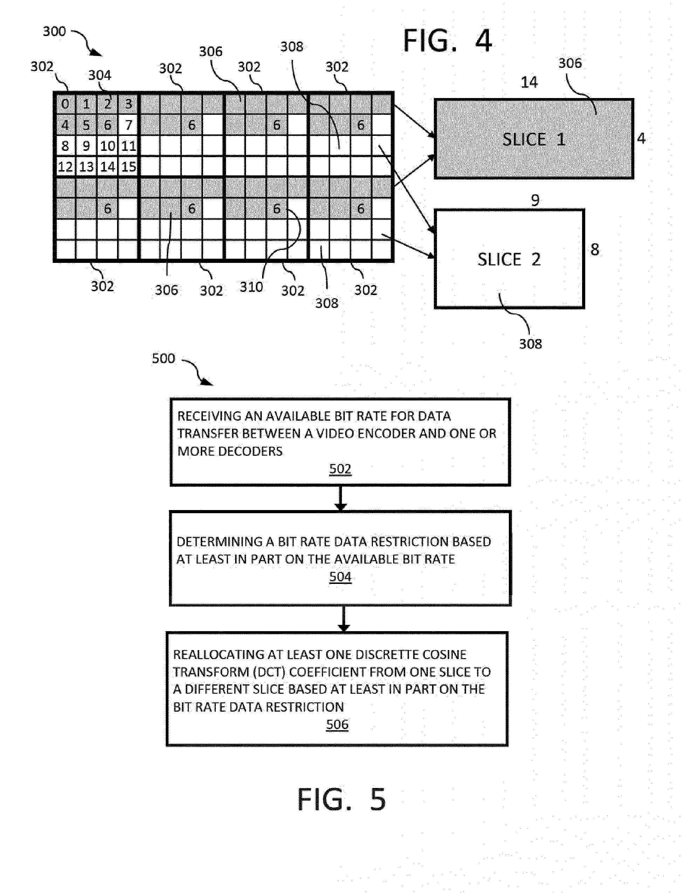

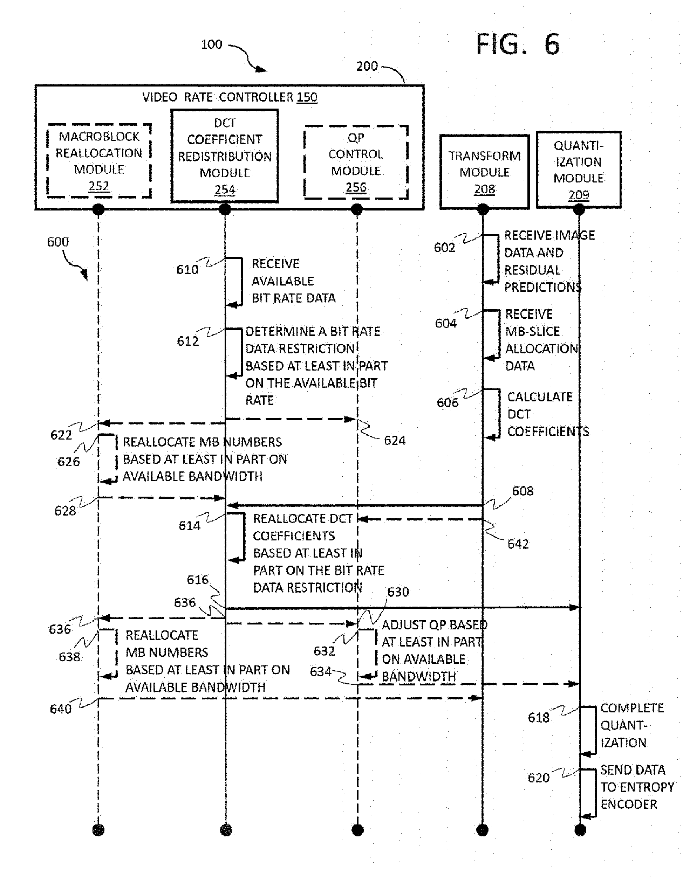

Additional and/or alternative details related to these approaches as well as to other aspects of video coding system 100, may be illustrated in one or more example implementations discussed in greater detail below with regard to FIGS. 2-4. As will be discussed in greater detail below, video coding system 100 may be used to perform some or all of the various functions discussed below in connection with FIGS. 5 and 6.

Referring to FIG. 2, in one example form, both or either of the layers 101 and 101' of the video coding system 100 may have logic modules 200. Some of the logical modules may be included in the video rate controller 150. The video rate controller 150 may have a DCT coefficient module 254, an optional macroblock reallocation module 252, and/or an optional quantitative parameter (QP) control module 256. The macroblock reallocation module 252, DCT coefficient redistribution module 254, and QP control 256, may respectively connect, or communicatively or operatively couple, to partition coding module 107, transform module 208, and quantization module 209. Transform module 208 and quantization module 209 may cooperatively form at least part of the transform and quantization module 108 and 108' described previously.

In more detail, partition coding module 107 or 107' receives image data whether received initially or including looped data from the quantization module and via the filter, motion, and/or prediction loop 204 to add encoding of predicted frames, for example. For the H.264/AVC example, the image data is geometrically divided or partitioned into slices, macroblocks, and smaller blocks of image or pixel data to be used for compression. Thus, the geometric slices, macroblocks, and smaller blocks (such as 4x4 or 8x8 block of pixels) are considered a geometric representation of areas on the image (also referred to herein as the frame or picture) that include details for the luminance and color of each pixel.

The defined partitions are then handed off to, or obtained by, the transform module 208. In one form, DCT calculations are then performed although other types of coefficient calculations may be used by the video coding system 100. In one form, this may include 4x4 or 8x8 matrix multiplication. The matrix operators (elements of each matrix) may be an eight bit integer, and the results may be limited to a 16 bit integer. The result of such DCT calculations may then be 4x4 or 8x8 matrices of coefficients in the frequency domain.

In one form, each coefficient is associated with at least one pixel of a picture. In contrast to the geometric blocks, the DCT calculations result in coefficient blocks or matrices of values (or simply blocks of coefficients) that represent the weighted strength or energy of each pixel. The coefficients are also arranged in coefficient slices that include or are associated with a number of the DCT coefficients. The coefficient slices may or may not correspond to the shape of the geometrical slices. The coefficient slices also may have boundaries (also referred to herein as coefficient partitions) that may not correspond to the edges of the coefficient blocks. Thus, a coefficient slice may extend through the middle of a coefficient block such that some coefficients in the block may belong to one coefficient slice, and other coefficients in the same coefficient block belong to a different adjacent coefficient slice. For example, for a 4x4 DCT transform, the result may be a 4x4 matrix of 16 coefficients. Numbering the coefficients from 0 to 15 by row, the coefficients may then be partitioned by placing coefficients in slices (selected randomly here for explanation) such as coefficients 0-3 in one group or coefficient slice, coefficients 4-8 in another slice, and coefficients 9-15 in a third slice for three coefficient partitions. This is explained in greater detail below in FIGS. 3-4.

The coefficient blocks or matrices are then handed off to, or obtained by, the quantization module 209. The quantization module may use calculations to simplify the coefficients (for example, turning all coefficients into real numbers within a certain range). By one example, a sequence of zero coefficients, which may typically form a significant part of any image, can then be discarded (or more accurately simply counted) to compress the data for the encoded bitstream. In one example form, let A/Qp = B where A is a coefficient, while Qp is a quantization parameter and B is an integer with a relatively small range. B then may be encoded into a bit stream. A decoder that receives B may then perform calculations such as A' = Qp * B where A' does not necessarily equal A but it may be relatively close. The value of Qp determines the accuracy.

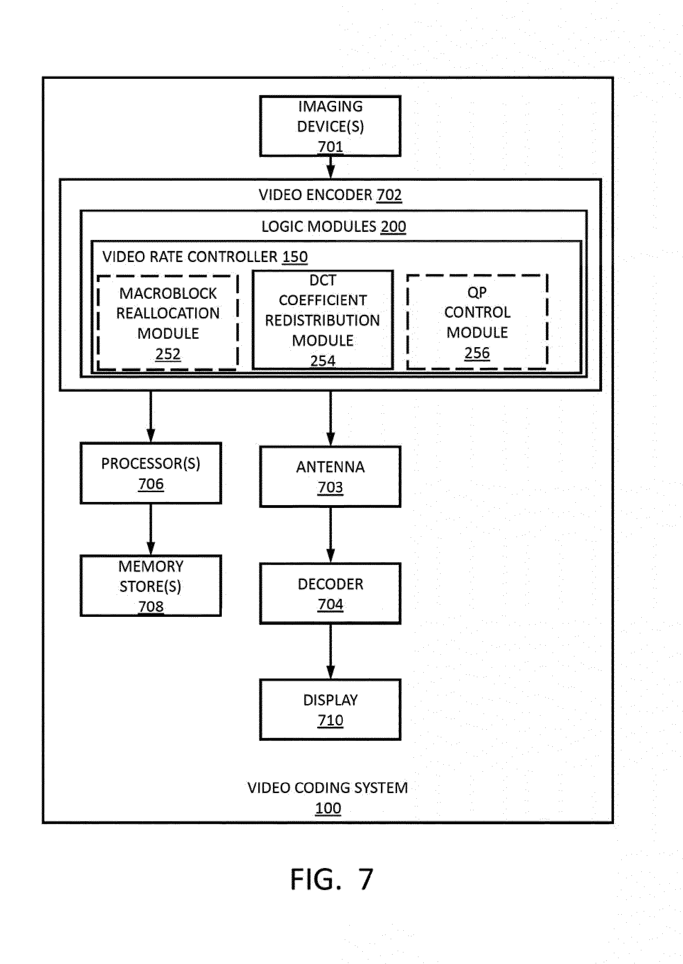

Once the quantization module 209 is finished with the coefficient slices, entropy encoder module 109 performs entropy coding, and the encoded bitstream may be transmitted to a buffer 210 at the decoder 704 (see FIG. 7) that has bit rate restrictions mentioned above.

Referring to FIG. 3, the DCT coefficient redistribution module 254 reallocates at least one DCT coefficient from one coefficient slice to a different coefficient slice based at least in part on a bit rate restriction. This may include a restriction on the number of bits a particular coefficient slice may have (also referred to herein as a slice size). For example, a set 300 of eight coefficient blocks 302 is shown, and each coefficient block 302 has sixteen coefficients numbered 0 to 15 from left to right and row by row (for example, raster scan order). In other examples, the coefficient block may be of any other suitable size, such as an 8x8 block with coefficients numbered 0 to 63, for example. These numbers are the place numbers of the coefficient, and they are not the actual value of the coefficient, which very well may be different. In one form, the coefficient is on a scale from 0 to 255, for example. In the illustrated example, each block has the same number of coefficients and the same configuration. In one form, the coefficient blocks 302 may have the same number of coefficients so that a slice partitions each coefficient block into the same groups of coefficients. For example, coefficients 1-5 of each coefficient block are placed in the same slice, and so forth. Thus in one form, both the number of coefficients and the coefficient position (or position number) may be placed in the same slice for each coefficient block.

Coefficient slices 306 (slice 1) and 308 (slice 2) are shown to cut through each block 302. One slice 306 is shown in gray, and the second adjacent slice 308 is shown in white or non-gray. In one form, the slices 306 and 308 are formed by starting at the coefficient numbered zero and extend along the row in the order of the coefficient numbers and may extend into part of a following row also in raster scan order fashion as shown. The boundary 310 (also referred to as the edge or coefficient slice partition) between the adjacent slices 306 and 308 is the edge of the coefficient squares where the color changes from gray to white. This coding tool (or slice structure) is called Medium Grain Scalability (MGS).

In order to reallocate a DCT coefficient from one coefficient slice to another coefficient slice, in one form, the coefficient partition 310 may be shifted within one or more of the coefficient blocks 302 so that a coefficient square or position 304 changes on which side of the boundary or partition 310 it resides. This changes the allocation of the coefficient from one adjacent slice to the other adjacent slice. By one approach, the slice partition 310 changes the same for each coefficient block 302 and therefore moves the same corresponding coefficient (or coefficient number or position) for each coefficient block 302. Thus, for example, comparing FIG. 3 to FIG. 4, it may be determined that slice 308 (slice 2) with 80 coefficients is an oversized slice with too many bits. By adjusting the slice partition 310 to extend beneath the coefficient 6, rather than above coefficient 6 in each coefficient block 302, coefficient 6 moved from slice 308 to slice 306 within each coefficient block 302. With this operation, slice 306 (slice 1) increased from 48 coefficients in FIG. 3 to 56 coefficients in FIG. 4, while slice 308 (slice 2) reduced from 80 coefficients in FIG. 3 to 72 coefficients in FIG. 4, resulting in a reduced coefficient population, and in turn reduced bit size, for the over-sized slice 308 (slice 2). In this example, this operation would make slice 2 compliant with a bit rate data restriction based at least in part on the available bit rate.

While a single coefficient was reallocated in each block, it will be understood that this need not always be so, and that the DCT coefficient redistribution module 254 may reallocate at least one DCT coefficient. Thus, a plurality of the DCT coefficients in a single coefficient block may be reallocated. Likewise, the coefficient number or position need not always be the next coefficient or coefficients along the coefficient slice partition 310. Accordingly, the basis for choosing which DCT coefficients to reallocate may be based on other criteria relating to the number or position of the coefficient (such as in the corners of the coefficient block 302), or may be based on calculations unrelated to the position, and may be related to the value of the coefficient, for example. Many examples are contemplated.

Additionally, the shape of the coefficient slices need not always follow the rows of the coefficient blocks 302, and may be of different shapes or configurations as is deemed efficient, and in one form, may be any shape as long as the coefficient block is scanned in raster order.

It will also be understood that while the general DCT coefficient reallocation process mentioned above is described in terms of the H.264/AVC-SVC standard, many other standards may be used including HEVC where coefficient PUs are analyzed instead of coefficient blocks, and other lossy transform and quantization techniques may be used based on a modified DCT process to obtain the coefficients. Regardless of the transform method used, the numbering and selection of the coefficients may remain at least the same or similar as that described above.

The DCT coefficient reallocation is quite advantageous since it does not change the geometric slice boundaries (they very well may be different from the coefficient slice boundaries). Thus, it avoids the need for the encoder to perform an additional step of slice boundary deblocking filtering. Also, there may be no further need to re-do quantization after the re-partitioning by moving the boundary of the coefficient slice. Finally, since this process is moving coefficients on a coefficient-by-coefficient process, or in other words, in some cases by a pixel by pixel process, the adjustment is on a very fine granularity level, which is very difficult to achieve with traditional QP-based rate control.

Returning to FIG. 2, in some examples, the macroblock reallocation module 252 may move a relatively large block of pixels from slice to slice. As mentioned above, a picture is associated with a plurality of macroblocks. Each macroblock is represented by a macroblock number and is associated with a plurality of pixels forming the picture. The macroblock reallocation module 252 adjusts a geometric size of at least one geometric slice by reallocating at least one macroblock number to a different geometric slice and based at least in part on a restriction on the available bit rate. This forms new or different slices that then may be packaged into network abstract layers (NALs). This procedure for adjusting the geometric size of a geometric slice is performed independently and separately from the procedure for reallocating a discrete cosine transform coefficient. In other words, the movement of a coefficient from slice to slice caused solely by the movement of a macroblock from slice to slice does not provide the fine bit reallocation that the DCT coefficient redistribution module 252 can provide. A description of how the macroblock reallocation might otherwise affect the DCT coefficient reallocation is explained below with reference to FIG. 6.

In some examples, the QP control module 256 may adjust at least one quantization parameter (QP) to adjust a compression of at least one slice, and based at least in part on a restriction on the available bit rate. More specifically, residuals are transformed into the spatial frequency domain by an integer transform that approximates the DCT. The QP determines the step size for associating the transformed coefficients with a finite set of steps. Large values of QP represent big steps that crudely approximate the spatial transform, so that most of the signal can be captured by only a few coefficients. Small values of QP more accurately approximate the block's spatial frequency spectrum, but at the cost of more bits. In order to accomplish this, algorithms are used that factor in both prediction error and the available bit rate. In H.264, each unit increase of QP lengthens the step size by 12% and reduces the bitrate by roughly 12%.

As discussed in greater detail below, video coding system 100 may be used to perform some or all of the various functions discussed below in connection with FIGS. 5 and/or 6.

Referring to FIG. 5, an example video coding process 500 is arranged in accordance with at least some implementations of the present disclosure. In the illustrated implementation, process 500 may include one or more operations, functions or actions as illustrated by one or more of boxes 502, 504, and/or 506. By way of non-limiting example, process 500 will be described herein with reference to example video coding system 100 of FIGS. 1, 2, and/or 7.

Process 500 may be used as a computer-implemented method for slice level bit rate control for video coding. Process 500 may begin with operation 502 "RECEIVING AN AVAILABLE BIT RATE FOR DATA TRANSFER BETWEEN A VIDEO ENCODER AND ONE OR MORE VIDEO DECODERS", where an available bit rate may be received for data transfer between the video encoder and one or more video decoders. In one example, an available bit rate may be received for data transfer between the video encoder and one or more video decoders via the video encoder.

Processing may continue from operation 502 to operation 504, "DETERMINING A BIT RATE DATA RESTRICTION BASED AT LEAST IN PART ON THE AVAILABLE BIT RATE", where a bit rate data restriction may be determined based at least in part on the available bit rate. For example, a bit rate data restriction may be determined based at least in part on the available bit rate via the video encoder.

Processing may then continue from operation 504 to operation 506 "REALLOCATING AT LEAST ONE DISCRETE COSINE TRANSFORM (DCT) COEFFICIENT FROM ONE SLICE TO A DIFFERENT SLICE BASED AT LEAST IN PART ON THE BIT RATE DATA RESTRICTION", where at least one discrete cosine transform (DCT) coefficient may be reallocated from one slice to a different slice based at least in part on the bit rate data restriction. For example, at least one discrete cosine transform (DCT) coefficient may be reallocated from one slice to a different slice based at least in part on the bit rate data restriction via the video encoder. The slice for such a reallocation may be associated with a number of discrete cosine transform coefficients, and where each discrete cosine transform coefficient may be associated with at least one pixel of a picture.

In operation, the reallocation of the DCT coefficients may include first determining whether at least one over-sized slice exists with more than a maximum number of bits, and then removing at least one DCT coefficient from the over-sized slice to another slice. The DCT coefficient may be moved from one slice to an adjacent slice although it will be understood that many alternatives exist.

Some additional and/or alternative details related to process 500 may be illustrated in one or more examples of implementations discussed in greater detail below with regard to FIG. 6. Specifically, for example, the DCT coefficient reallocation may be performed alone, or alternatively, it may be performed in a certain order with the macroblock reallocation and QP adjustment.

Referring to FIG. 6, example video coding system 100 operates video coding process 600 in accordance with at least some implementations of the present disclosure. A process using the DCT coefficient redistribution module 254 is shown in solid line and some optional, alternative approaches are indicated in dashed line. In more detail and in the illustrated implementation, process 600 may include one or more operations, functions, or actions as illustrated by one or more of actions 602 to 642 numbered evenly. By way of non-limiting example, process 600 will be described herein with reference to example video coding system 100 of FIGS. 1-2 and 7.

In the illustrated implementation, video coding system 100 may include logic modules 200, the like, and/or combinations thereof. For example, logic modules 200 may include those logic modules forming the video rate control 150 such as DCT coefficient redistribution module 254 and optionally with macroblock reallocation module 252 and QP control module 256, the like, and/or combinations thereof. These logic modules also coordinate or are communicatively coupled to transform module 208 and quantization module 209 described above, and which may or may not be considered part of logic modules 200. The DCT coefficient redistribution module 254 may be configured to reallocate at least one discrete cosine transform (DCT) coefficient from one slice to a different slice based at least in part on a bit rate data restriction. The different slice is associated with a number of discrete cosine transform coefficients, and each discrete cosine transform coefficient is associated with at least one pixel of a picture. The macroblock reallocation module 252 is configured to adjust a geometric size of at least one slice by reallocating at least one macroblock number to a different slice and based at least in part on a restriction on the available bit rate. The reallocating of the discrete cosine transform coefficient may be performed separately from adjusting the geometric size as explained above. Also, the QP control module 256 is configured to adjust at least one quantization parameter to adjust a compression of at least one slice, and based at least in part on a restriction on the available bit rate as explained above. Although video coding system 100, as shown in FIG. 6, may include one particular set of operations or actions associated with particular modules, these operations or actions may be associated with different modules than the particular modules illustrated here.

Process 600 may be used as a computer-implemented method for slice level bit control for video coding. Process 600 may first include operations "RECEIVE IMAGE DATA AND RESIDUAL PREDICTIONS" 602, and "RECEIVE MB-SLICE ALLOCATION DATA" 604, from a partition coding module to map the initial coefficient allocations for example. The transform module may then "CALCULATE DCT COEFFICIENTS" 606 and make these initial coefficients available for operation 608 by the DCT coefficient redistribution module 254.

By one alternative implementation, an encoder, and in turn the DCT coefficient redistribution module 254, performs the operation "RECEIVE AVAILABLE BIT RATE DATA" 610, where the data is related to a data transfer between the video encoder and one or more video decoders. The next operation is to "DETERMINE A BIT RATE DATA RESTRICTION BASED AT LEAST IN PART ON THE AVAILABLE BIT RATE" 612. This bit rate data restriction may include a maximum bit, coefficient slice size and is described in detail above.

By one alternative approach, the bit rate data restrictions also are made available for operations 622 and 624 by the macroblock reallocation module 252 and/or the QP control module 256 as explained in greater detail below. Otherwise the process 600 continues with the reallocation of DCT coefficients. Specifically, now that the DCT coefficient module 254 has the bit rate data restrictions and the initial DCT coefficient allocations, the DCT coefficient redistribution module 254 can "REALLOCATE DCT COEFFICIENTS BASED AT LEAST IN PART ON THE BIT RATE DATA RESTRICTION" 614. More specifically, this may include reallocating at least one discrete cosine transform (DCT) coefficient from one slice to a different slice based at least in part on the bit rate data restriction, where the different slice is associated with a number of discrete cosine transform coefficients, and where each discrete cosine transform coefficient is associated with at least one pixel of a picture.

Once the DCT coefficients are reallocated, the newly defined slices may be provided for operation 616 by the quantization module 209 to complete 618 quantization and to then send 620 the quantized data to the entropy encoder for further compression and transmission of the encoded bitstream.

By alternative approaches, the DCT coefficient redistribution module 254 is used in conjunction with the macroblock reallocation module 252 and the QP control module 256 albeit each module may operate separately. In one form, however, when all three modules are used, a certain logical order may be established such that each subsequent module builds upon the adjustments made by the previous module. Thus, in one form, operation 622 continues at the macroblock reallocation module 252 which uses the bit data restriction(s). While FIG. 6 shows that the DCT coefficient redistribution module 254 receives the bit rate data before passing operation to the other modules, it will be understood that this refers to the encoder receiving and storing the data and making the data available for one or more modules to obtain the data.

Next, the macroblock reallocation module will "REALLOCATE MB NUMBERS BASED AT LEAST IN PART ON AVAILABLE BANDWIDTH" 626, and more specifically, this includes adjusting a geometric size of at least one slice by reallocating at least one macroblock number to a different slice and based at least in part on a restriction on the available bit rate. The reallocating of a discrete cosine transform coefficient comprises reallocating the discrete cosine transform coefficient separately from this adjustment of the geometric size. For this operation, the picture is associated with a plurality of macroblocks, and each macroblock is represented by a macroblock number and is associated with a plurality of pixels forming the picture. Once the modification of the geometric slices is complete, the operation 628 continues with the DCT coefficient redistribution module 254 (and based at least in part on the reallocated macroblocks and adjusted slices via the transform module 208 although this path is not shown on FIG. 6 for clarity).

The DCT coefficient redistribution module 254 reallocates coefficients based on the adjusted slices in operation 614 as described above, and process 600 then continues with operation 630 at the QP control. The QP control will then "ADJUST QP BASED AT LEAST IN PART ON AVAILABLE BANDWIDTH" 632, which includes adjusting at least one quantization parameter (QP) to adjust a compression of at least one slice. The adjustment is based at least in part on a restriction on the available bit rate, or in other words, at least in part on available bandwidth. Once the quantization parameter adjustment is complete, operation 634 may continue with the quantization module 209 as mentioned previously. With this operation, the QP are adjusted at least in part based on at least two prior bit rate adjustments: the MB reallocations on the geometric slices and the DCT coefficient reallocations on the coefficient slices providing for slice level bit rate control by multiple methods.

In other alternative forms, the bit rate data restriction, available bit rate data, and initial prediction data and DCT coefficients may be provided to the QP control 256, and operation 624 and 642 may continue with the QP control 256 to adjust parameters in operation 632 for at least some data and without the reallocation of coefficients or macroblocks. Similarly, the results of the macroblock reallocation may be provided directly to the transform module 208 and quantization module while skipping the DCT coefficient redistribution module 254. As another alternative, the operation 636 may not switch to the macroblock reallocation module 252 until after the DCT coefficient reallocation operation 614 to perform 638 the MB reallocation. In this case, the operation 640 may then continue with the transform module 208 and quantization module 209 to continue with the compression.

In addition, any one or more of the operations of FIGS. 5 and 6 may be undertaken in response to instructions provided by one or more computer program products. Such program products may include signal bearing media providing instructions that, when executed by, for example, a processor, may provide the functionality described herein. The computer program products may be provided in any form of computer readable medium. Thus, for example, a processor including one or more processor core(s) may undertake one or more of the blocks shown in FIGS. 5 and 6 in response to instructions conveyed to the processor by a computer readable medium.

As used in any implementation described herein, the term "module" refers to any combination of software, firmware and/or hardware configured to provide the functionality described herein. The software may be embodied as a software package, code and/or instruction set or instructions, and "hardware", as used in any implementation described herein, may include, for example, singly or in any combination, hardwired circuitry, programmable circuitry, state machine circuitry, and/or firmware that stores instructions executed by programmable circuitry. The modules may, collectively or individually, be embodied as circuitry that forms part of a larger system, for example, an integrated circuit (IC), system on-chip (SoC), and so forth.

Referring to FIG. 7, an example video coding system 100 is arranged in accordance with at least some implementations of the present disclosure. In the illustrated implementation, video coding system 100 may include imaging device(s) 701, a video encoder 702, an antenna 703, a video decoder 704, one or more processors 706, one or more memory stores 708, a display 710, and/or logic modules 200. Logic modules 200 may include a video rate controller 150 with DCT coefficient redistribution module 254. Optionally, video rate controller 150 may also include macroblock reallocation module 252 and/or quantization parameter control 256, the like, and/or combinations thereof.

As illustrated, imaging device(s) 701, encoder 702, processor 706, and/or memory store 708, may be capable of communication with one another and/or communication with portions of logic modules 200. Similarly, antenna 703, video decoder 704, and/or display 710 may be capable of communication with one another and/or communication with portions of logic modules 200. Accordingly, video encoder 702 may include all or portions of logic modules 200, while video decoder 704 may include similar logic modules. Although video coding system 100, as shown in FIG. 7, may include one particular set of operations, components, or actions associated with particular modules, these operations, components, or actions may be associated with different modules than the particular modules illustrated here.

In some examples, video encoder 702 may be configured to control the bit rate of an encoded bitstream by reallocating at least one discrete cosine transform (DCT) coefficient from one slice of coefficients to a different slice of coefficients, and based at least in part on a bit rate data restriction itself based at least in part on the available bit rate. Video coding system 100 also may include antenna 703, video decoder 704, the like, and/or combinations thereof. Antenna 703 may be configured to communicate an encoded bitstream of video data, and specifically, for example, receive an encoded bitstream from the encoder 702 and transmit the encoded bitstream to a decoder 704. Video decoder 704 may be communicatively coupled to antenna 703 and may be configured to decode the encoded bitstream.

In other examples, video coding system 100 may include display device 710, one or more processors 706, one or more memory stores 708, DCT redistribution module 254, macroblock reallocation module 252, and/or QP control module 256, the like, and/or combinations thereof. Display 710 may be configured to present video data. Processors 706 may be communicatively coupled to display 710. Memory stores 708 may be communicatively coupled to the one or more processors 706. DCT redistribution module 254 of video encoder 702 (or video decoder 704 in other examples) may be communicatively coupled to the one or more processors 706 and may be configured to reallocate at least one discrete cosine transform (DCT) coefficient from one slice of coefficients to a different slice of coefficients.

By various approaches, the logic modules including the macroblock reallocation module 252, DCT coefficient redistribution module 254, and/or QP control module 256 of video rate controller 150 may be implemented in hardware, while software may implement other logic modules. For example, in some forms, macroblock reallocation module 252 and QP control module 256 may be implemented by application-specific integrated circuit (ASIC) logic while DCT coefficient redistribution module 254 may be provided by software instructions executed by logic such as processors 706. However, the present disclosure is not limited in this regard and any of the video rate controller 150 modules may be implemented by any combination of hardware, firmware and/or software. In addition, memory stores 708 may be any type of memory such as volatile memory (e.g., Static Random Access Memory (SRAM), Dynamic Random Access Memory (DRAM), etc.) or non-volatile memory (e.g., flash memory, etc.), and so forth. In a non-limiting example, memory stores 708 may be implemented by cache memory.

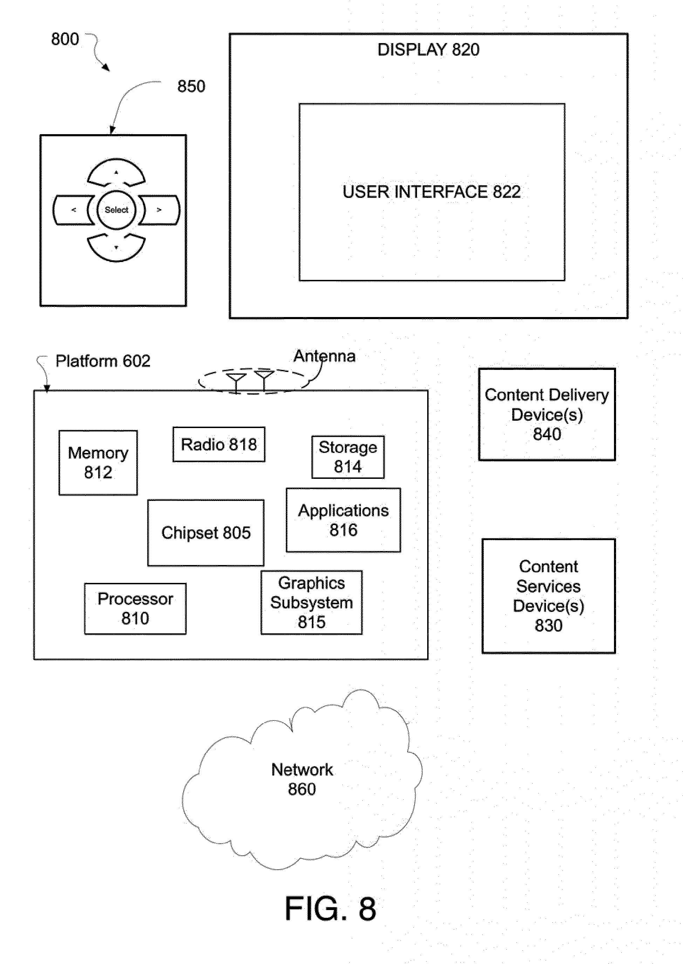

Referring to FIG. 8, an example system 800 in accordance with the present disclosure operates one or more aspects of the video coding system described herein. It will be understood from the nature of the system components described below that such components may be associated with, or used to operate, certain part or parts of the video coding system described above. In various implementations, system 800 may be a media system although system 800 is not limited to this context. For example, system 800 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

In various implementations, system 800 includes a platform 802 coupled to a display 820. Platform 802 may receive content from a content device such as content services device(s) 830 or content delivery device(s) 840 or other similar content sources. A navigation controller 850 including one or more navigation features may be used to interact with, for example, platform 802 and/or display 820. Each of these components is described in greater detail below.

In various implementations, platform 802 may include any combination of a chipset 805, processor 810, memory 812, storage 814, graphics subsystem 815, applications 816 and/or radio 818. Chipset 805 may provide intercommunication among processor 810, memory 812, storage 814, graphics subsystem 815, applications 816 and/or radio 818. For example, chipset 805 may include a storage adapter (not depicted) capable of providing intercommunication with storage 814.

Processor 810 may be implemented as a Complex Instruction Set Computer (CISC) or Reduced Instruction Set Computer (RISC) processors; x86 instruction set compatible processors, multi-core, or any other microprocessor or central processing unit (CPU). In various implementations, processor 810 may be dual-core processor(s), dual-core mobile processor(s), and so forth.

Memory 812 may be implemented as a volatile memory device such as, but not limited to, a Random Access Memory (RAM), Dynamic Random Access Memory (DRAM), or Static RAM (SRAM).

Storage 814 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In various implementations, storage 814 may include technology to increase the storage performance enhanced protection for valuable digital media when multiple hard drives are included, for example.

Graphics subsystem 815 may perform processing of images such as still or video for display. Graphics subsystem 815 may be a graphics processing unit (GPU) or a visual processing unit (VPU), for example. An analog or digital interface may be used to communicatively couple graphics subsystem 815 and display 820. For example, the interface may be any of a High-Definition Multimedia Interface, Display Port, wireless HDMI, and/or wireless HD compliant techniques. Graphics subsystem 815 may be integrated into processor 810 or chipset 805. In some implementations, graphics subsystem 815 may be a stand-alone card communicatively coupled to chipset 805.

The graphics and/or video processing techniques described herein may be implemented in various hardware architectures. For example, graphics and/or video functionality may be integrated within a chipset. Alternatively, a discrete graphics and/or video processor may be used. As still another implementation, the graphics and/or video functions may be provided by a general purpose processor, including a multi-core processor. In further embodiments, the functions may be implemented in a consumer electronics device.

Radio 818 may include one or more radios capable of transmitting and receiving signals using various suitable wireless communications techniques. Such techniques may involve communications across one or more wireless networks. Example wireless networks include (but are not limited to) wireless local area networks (WLANs), wireless personal area networks (WPANs), wireless metropolitan area network (WMANs), cellular networks, and satellite networks. In communicating across such networks, radio 818 may operate in accordance with one or more applicable standards in any version.

In various implementations, display 820 may include any television type monitor or display. Display 820 may include, for example, a computer display screen, touch screen display, video monitor, television-like device, and/or a television. Display 820 may be digital and/or analog. In various implementations, display 820 may be a holographic display. Also, display 820 may be a transparent surface that may receive a visual projection. Such projections may convey various forms of information, images, and/or objects. For example, such projections may be a visual overlay for a mobile augmented reality (MAR) application. Under the control of one or more software applications 816, platform 802 may display user interface 822 on display 820.

In various implementations, content services device(s) 830 may be hosted by any national, international and/or independent service and thus accessible to platform 802 via the Internet, for example. Content services device(s) 830 may be coupled to platform 802 and/or to display 820. Platform 802 and/or content services device(s) 830 may be coupled to a network 860 to communicate (e.g., send and/or receive) media information to and from network 860. Content delivery device(s) 840 also may be coupled to platform 802 and/or to display 820.

In various implementations, content services device(s) 830 may include a cable television box, personal computer, network, telephone, Internet enabled devices or appliance capable of delivering digital information and/or content, and any other similar device capable of unidirectionally or bidirectionally communicating content between content providers and platform 802 and/display 820, via network 860 or directly. It will be appreciated that the content may be communicated unidirectionally and/or bidirectionally to and from any one of the components in system 800 and a content provider via network 860. Examples of content may include any media information including, for example, video, music, medical and gaming information, and so forth.

Content services device(s) 830 may receive content such as cable television programming including media information, digital information, and/or other content. Examples of content providers may include any cable or satellite television or radio or Internet content providers. The provided examples are not meant to limit implementations in accordance with the present disclosure in any way.

In various implementations, platform 802 may receive control signals from navigation controller 850 having one or more navigation features. The navigation features of controller 850 may be used to interact with user interface 822, for example. In embodiments, navigation controller 850 may be a pointing device that may be a computer hardware component (specifically, a human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of controller 850 may be replicated on a display (e.g., display 820) by movements of a pointer, cursor, focus ring, or other visual indicators displayed on the display. For example, under the control of software applications 816, the navigation features located on navigation controller 850 may be mapped to virtual navigation features displayed on user interface 822, for example. In embodiments, controller 850 may not be a separate component but may be integrated into platform 802 and/or display 820. The present disclosure, however, is not limited to the elements or in the context shown or described herein.

In various implementations, drivers (not shown) may include technology to enable users to instantly turn on and off platform 802 like a television with the touch of a button after initial boot-up, when enabled, for example. Program logic may allow platform 802 to stream content to media adaptors or other content services device(s) 830 or content delivery device(s) 840 even when the platform is turned "off." In addition, chipset 805 may include hardware and/or software support for 8.1 surround sound audio and/or high definition (7.1) surround sound audio, for example. Drivers may include a graphics driver for integrated graphics platforms. In embodiments, the graphics driver may comprise a peripheral component interconnect (PCI) Express graphics card.

In various implementations, any one or more of the components shown in system 800 may be integrated. For example, platform 802 and content services device(s) 830 may be integrated, or platform 802 and content delivery device(s) 840 may be integrated, or platform 802, content services device(s) 830, and content delivery device(s) 840 may be integrated, for example. In various embodiments, platform 802 and display 820 may be an integrated unit. Display 820 and content service device(s) 830 may be integrated, or display 820 and content delivery device(s) 840 may be integrated, for example. These examples are not meant to limit the present disclosure.

In various embodiments, system 800 may be implemented as a wireless system, a wired system, or a combination of both. When implemented as a wireless system, system 800 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 800 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media may include a wire, cable, metal leads, printed circuit board (PCB), backplane, switch fabric, semiconductor material, twisted-pair wire, co-axial cable, fiber optics, and so forth.

Platform 802 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The implementations, however, are not limited to the elements or in the context shown or described in FIG. 8.

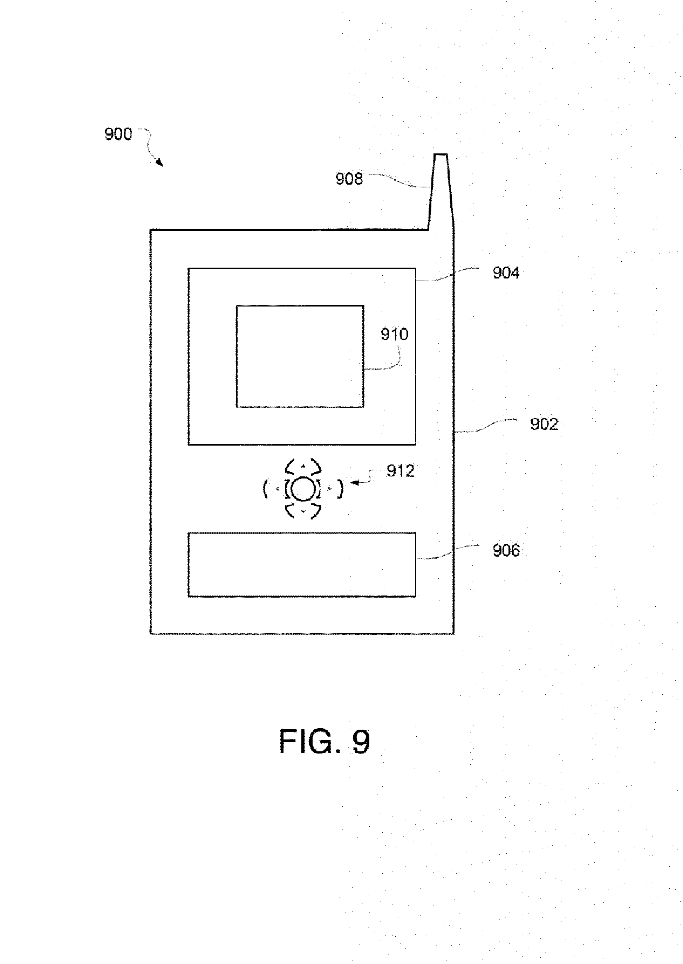

Referring to FIG. 9, a small form factor device 900 is one example of the varying physical styles or form factors in which system 800 may be embodied. By this approach, device 900 may be implemented as a mobile computing device having wireless capabilities. A mobile computing device may refer to any device having a processing system and a mobile power source or supply, such as one or more batteries, for example.

As described above, examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In various embodiments, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

As shown in FIG. 9, device 900 may include a housing 902, a display 904, an input/output (I/O) device 906, and an antenna 908. Device 900 also may include navigation features 912. Display 904 may include any suitable display unit for displaying information appropriate for a mobile computing device. I/O device 906 may include any suitable I/O device for entering information into a mobile computing device. Examples for I/O device 906 may include an alphanumeric keyboard, a numeric keypad, a touch pad, input keys, buttons, switches, rocker switches, microphones, speakers, voice recognition device and software, and so forth. Information also may be entered into device 900 by way of microphone (not shown). Such information may be digitized by a voice recognition device (not shown). The embodiments are not limited in this context.

Various forms of the devices and processes described herein may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

While certain features set forth herein have been described with reference to various implementations, this description is not intended to be construed in a limiting sense. Hence, various modifications of the implementations described herein, as well as other implementations, which are apparent to persons skilled in the art to which the present disclosure pertains are deemed to lie within the spirit and scope of the present disclosure.

The following examples pertain to further implementations.

In one example, a computer-implemented method for video coding may include receiving, by a video encoder, an available bit rate for data transfer between the video encoder and one or more video decoders. The method also includes determining, by the video encoder, a bit rate data restriction based at least in part on the available bit rate, as well as reallocating, by the video encoder, at least one discrete cosine transform (DCT) coefficient from one slice to a different slice. This determination is made based at least in part on the bit rate data restriction. The different slice is associated with a number of discrete cosine transform coefficients, and each discrete cosine transform coefficient is associated with at least one pixel of a picture.

In another example, for the computer-implemented method, reallocation includes determining whether at least one over-sized slice exists with more than a maximum number of bits, and removing at least one DCT coefficient from the over-sized slice to another slice. Reallocation also may comprise moving at least one DCT coefficient from one slice to an adjacent slice. The discrete cosine coefficients are grouped in coefficient blocks, each block has the same number of coefficients and in the same configuration, and reallocation includes moving a plurality of the coefficients with a corresponding position in a plurality of blocks to a different slice. Reallocation may comprise shifting at least one slice coefficient partition that extends through at least one block and defines an edge of two adjacent slices in order to move at least one coefficient from one adjacent slice to the other adjacent slice. The picture is associated with a plurality of macroblocks, each macroblock being represented by a macroblock number and is associated with a plurality of pixels forming the picture. The method comprises adjusting a geometric size of at least one slice by reallocating at least one macroblock number to a different slice and based at least in part on a restriction on the available bit rate, and reallocation of a discrete cosine transform coefficient includes reallocating the discrete cosine transform coefficient separately from adjusting the geometric size. The method further includes adjusting at least one quantization parameter (QP) to adjust a compression of at least one slice, and based at least in part on a restriction on the available bit rate. An encoded scalable video coding (SVC) bitstream may also be provided with a base layer and at least one enhancement layer, and where the reallocating is associated with at least one layer and is not associated with at least one other layer.

In other examples, a system for video coding on a computer may include at least one processor and at least one memory communicatively coupled to the processor. Slice data provides at least two slices, each slice has a number of discrete cosine transform coefficients, and each discrete cosine transform coefficient is associated with at least one pixel of a picture. A discrete cosine transform coefficient redistribution module is communicatively coupled to the processor and is configured to receive an available bit rate for data transfer between the video encoder and at least one video decoder. It also determines a bit rate data restriction based at least in part on the available bit rate, and reallocates at least one discrete cosine transform coefficient from one slice to a different slice based at least in part on the bit rate data restriction.

In yet another example, the system for video coding on a computer may further include configuring the discrete cosine transform redistribution module to determine whether at least one over-sized slice exists with more than a maximum number of bits, and remove at least one discrete cosine transform coefficient from the over-sized slice to another slice. The discrete cosine transform redistribution module is configured to move at least one discrete cosine transform coefficient from one slice to an adjacent slice. The discrete cosine transform coefficients are grouped in coefficient blocks, each block having the same number of coefficients and in the same configuration. In this case, the discrete cosine transform coefficient redistribution module is configured to move a plurality of the coefficients with a corresponding position in a plurality of blocks to a different slice. Also, the discrete cosine transform coefficient redistribution module is configured to shift a slice coefficient partition that extends through at least one block and defines an edge of two adjacent slices in order to move at least one coefficient from one adjacent slice to the other adjacent slice. The picture is associated with a plurality of macroblocks, each macroblock is represented by a macroblock number and is associated with a plurality of pixels forming the picture. The system comprises a macroblock reallocation module configured to adjust a geometric size of at least one slice by reallocating at least one macroblock number to a different slice and based at least in part on a restriction on the available bit rate. The discrete coefficient transform redistribution module moves discrete cosine transform coefficients among slices separately from the movement of macroblocks to adjust the geometric size by the macroblock reallocation module. The system comprises a quantization parameter (QP) control module configured to adjust at least one quantization parameter to adjust a compression of at least one slice, and based at least in part on a restriction on the available bit rate. Also, the system comprises an encoded scalable video coding (SVC) bitstream with a base layer and at least one enhancement layer, and wherein the discrete cosine transform coefficient redistribution module is configured to reallocate coefficients for at least one layer and less than all layers.

In still a further example, at least one non-transitory article or other machine readable medium for video coding having stored therein a computer program with instructions that when executed, result in receiving, by a video encoder, an available bit rate for data transfer between the video encoder and one or more video decoders. The article also includes determining, by the video encoder, a bit rate data restriction based at least in part on the available bit rate, as well as reallocating, by the video encoder, at least one discrete cosine transform (DCT) coefficient from one slice to a different slice. This determination is made based at least in part on the bit rate data restriction. The different slice is associated with a number of discrete cosine transform coefficients, and each discrete cosine transform coefficient is associated with at least one pixel of a picture.

In another example, the at least one non-transitory article or other machine readable medium for video coding also includes instructions, when executed, resulting in reallocating that comprises determining whether at least one over-sized slice exists with more than a maximum number of bits, and removing at least one discrete cosine transform coefficient from the over-sized slice to another slice. Reallocating also comprises moving at least one discrete cosine transform coefficient from one slice to an adjacent slice. The discrete cosine coefficients are grouped in coefficient blocks, each block has the same number of coefficients and in the same configuration, and reallocating comprises moving a plurality of the coefficients with a corresponding position in a plurality of blocks to a different slice. Reallocating also comprises shifting a slice coefficient partition that extends through at least one block and defines an edge of two adjacent slices in order to move at least one coefficient from one adjacent slice to the other adjacent slice. The picture is associated with a plurality of macroblocks, each macroblock being represented by a macroblock number and being associated with a plurality of pixels forming the picture, and the instructions result in adjusting a geometric size of at least one slice by reallocating at least one macroblock number to a different slice and based at least in part on a restriction on the available bit rate. The reallocation of a discrete cosine transform coefficient is performed separately from adjusting the geometric size. The instructions also result in adjusting at least one quantization parameter (QP) to adjust a compression of at least one slice, and based at least in part on a restriction on the available bit rate. The instructions result in providing an encoded scalable video coding (SVC) bitstream with a base layer and at least one enhancement layer. The reallocating is associated with at least one layer and is not associated with at least one other layer.

In a further example, at least one machine readable medium may include a plurality of instructions that in response to being executed on a computing device, causes the computing device to perform the method according to any one of the above examples.

In a still further example, an apparatus may include means for performing the methods according to any one of the above examples.

The above examples may include specific combination of features. However, the above examples are not limited in this regard and, in various implementations, the above examples may include undertaking only a subset of such features, undertaking a different order of such features, undertaking a different combination of such features, and/or undertaking additional features than those features explicitly listed. For example, all features described with respect to any example methods herein may be implemented with respect to any example apparatus, example systems, and/or example articles, and *vice versa.*

## Claims

1. A computer-implemented method for video coding, comprising:
receiving, by a video encoder, an available bit rate for data transfer between the video encoder and one or more video decoders;
determining, by the video encoder, a bit rate data restriction based at least in part on the available bit rate; and
reallocating, by the video encoder, at least one discrete cosine transform (DCT) coefficient from one slice to a different slice based at least in part on the bit rate data restriction, wherein the different slice is associated with a number of discrete cosine transform coefficients, and wherein each discrete cosine transform coefficient is associated with at least one pixel of a picture.

2. The method of claim 1 wherein reallocating comprises determining whether at least one over-sized slice exists with more than a maximum number of bits, and removing at least one DCT coefficient from the over-sized slice to another slice.

3. The method of claim 1 or 2, wherein the discrete cosine coefficients are grouped in coefficient blocks, each block having the same number of coefficients and in the same configuration, and wherein reallocating comprises moving a plurality of the coefficients with a corresponding position in a plurality of blocks to a different slice.

4. The method according to any of the previous claims, wherein the discrete cosine coefficients are grouped in coefficient blocks, each block having the same number of coefficients and in the same configuration, and wherein reallocating comprises shifting a slice coefficient partition that extends through at least one block and defines an edge of two adjacent slices in order to move at least one coefficient from one adjacent slice to the other adjacent slice.

5. The method according to any of the previous claims, wherein the picture is associated with a plurality of macroblocks, each macroblock being represented by a macroblock number and being associated with a plurality of pixels forming the picture, and the method comprising adjusting a geometric size of at least one slice by reallocating at least one macroblock number to a different slice and based at least in part on a restriction on the available bit rate, and wherein reallocating a discrete cosine transform coefficient comprises reallocating the discrete cosine transform coefficient separately from adjusting the geometric size.

6. The method according to any of the previous claims, comprising adjusting at least one quantization parameter (QP) to adjust a compression of at least one slice, and based at least in part on a restriction on the available bit rate.

7. The method according to any of the previous claims, wherein the picture is associated with a plurality of macroblocks, each macroblock being represented by a macroblock number and being associated with a plurality of pixels forming the picture, and the method comprising adjusting a geometric size of at least one slice by reallocating at least one macroblock number to a different slice and based at least in part on a restriction on the available bit rate, and wherein reallocating a discrete cosine transform coefficient comprises reallocating the discrete cosine transform coefficient separately from adjusting the geometric size; and
adjusting at least one quantization parameter (QP) to adjust a compression of at least one slice, and based at least in part on a restriction on the available bit rate.

8. The method according to any of the previous claims, comprising providing an encoded scalable video coding (SVC) bitstream with a base layer and at least one enhancement layer, and wherein the reallocating is associated with at least one layer and is not associated with at least one other layer.

9. The method according to any of the previous claims, wherein reallocating comprises determining whether at least one over-sized slice exists with more than a maximum number of bits, and removing at least one DCT coefficient from the over-sized slice to another slice;
wherein reallocating comprises moving at least one DCT coefficient from one slice to an adjacent slice;
wherein the discrete cosine coefficients are grouped in coefficient blocks, each block having the same number of coefficients and in the same configuration, and wherein reallocating comprises moving a plurality of the coefficients with a corresponding position in a plurality of blocks to a different slice;
wherein reallocating comprises shifting at least one slice coefficient partition that extends through at least one block and defines an edge of two adjacent slices in order to move at least one coefficient from one adjacent slice to the other adjacent slice;
wherein the picture is associated with a plurality of macroblocks, each macroblock being represented by a macroblock number and being associated with a plurality of pixels forming the picture, and the method comprising adjusting a geometric size of at least one slice by reallocating at least one macroblock number to a different slice and based at least in part on a restriction on the available bit rate, and wherein reallocating a discrete cosine transform coefficient comprises reallocating the discrete cosine transform coefficient separately from adjusting the geometric size;
wherein the method comprises adjusting at least one quantization parameter (QP) to adjust a compression of at least one slice, and based at least in part on a restriction on the available bit rate; and
wherein the method comprises providing an encoded scalable video coding (SVC) bitstream with a base layer and at least one enhancement layer, and wherein the reallocating is associated with at least one layer and is not associated with at least one other layer.

10. A system for video coding on a computer:
at least one processor;
at least one memory communicatively coupled to the processor;
slice data providing at least two slices, each slice having a number of discrete cosine transform coefficients, and wherein each discrete cosine transform coefficient is associated with at least one pixel of a picture; and
a discrete cosine transform coefficient redistribution module communicatively coupled to the processor and configured to:
receive an available bit rate for data transfer between the video encoder and at least one video decoder,
determine a bit rate data restriction based at least in part on the available bit rate, and
reallocate at least one discrete cosine transform coefficient from one slice to a different slice based at least in part on the bit rate data restriction.

11. The system of claim 10 wherein the discrete cosine transform redistribution module is configured to determine whether at least one over-sized slice exists with more than a maximum number of bits, and remove at least one discrete cosine transform coefficient from the over-sized slice to another slice.

12. The system of claim 11 wherein the discrete cosine coefficients are grouped in coefficient blocks, each block having the same number of coefficients and in the same configuration, and wherein the discrete cosine transform coefficient redistribution module is configured to move a plurality of the coefficients with a corresponding position in a plurality of blocks to a different slice, and
wherein the discrete cosine transform coefficient redistribution module is configured to shift a slice coefficient partition that extends through at least one block and defines an edge of two adjacent slices in order to move at least one coefficient from one adjacent slice to the other adjacent slice.

13. The system according to any of claims 10-12 wherein the discrete cosine transform redistribution module is configured to determine whether at least one over-sized slice exists with more than a maximum number of bits, and remove at least one discrete cosine transform coefficient from the over-sized slice to another slice;
wherein the discrete cosine transform redistribution module is configured to move at least one discrete cosine transform coefficient from one slice to an adjacent slice;
wherein the discrete cosine transform coefficients are grouped in coefficient blocks, each block having the same number of coefficients and in the same configuration, and wherein the discrete cosine transform coefficient redistribution module is configured to move a plurality of the coefficients with a corresponding position in a plurality of blocks to a different slice;
wherein the discrete cosine transform coefficient redistribution module is configured to shift a slice coefficient partition that extends through at least one block and defines an edge of two adjacent slices in order to move at least one coefficient from one adjacent slice to the other adjacent slice;
wherein the picture is associated with a plurality of macroblocks, each macroblock being represented by a macroblock number and being associated with a plurality of pixels forming the picture, the system comprising a macroblock reallocation module configured to adjust a geometric size of at least one slice by reallocating at least one macroblock number to a different slice and based at least in part on a restriction on the available bit rate, and wherein the discrete coefficient transform redistribution module moves discrete cosine transform coefficients among slices separately from the movement of macroblocks to adjust the geometric size by the macroblock reallocation module;
wherein the system comprises a quantization parameter (QP) control module configured to adjust at least one quantization parameter to adjust a compression of at least one slice, and based at least in part on a restriction on the available bit rate; and
wherein the system comprises an encoded scalable video coding (SVC) bitstream with a base layer and at least one enhancement layer, and wherein the discrete cosine transform coefficient redistribution module is configured to reallocate coefficients for at least one layer and less than all layers.

14. At least one machine readable medium comprising:
a plurality of instructions that in response to being executed on a computing device, causes the computing device to perform the method according to any one of claims 1-9.

15. An apparatus, comprising:
means for performing the methods according to any one of claims 1-9.
